# EUROPEAN PATENT APPLICATION

(11) **EP 0 524 913 A1**
(43) Date of publication of application: **27.01.1993**
(21) Application number: 92830351.0
(22) Date of filing: 03.07.1992
(51) Int. Cl.: B65G 67/04, B65G 65/02

(54) **Apparatus for the automatic loading and unloading of goods, in particular between quays and vehicle platforms**

(30) Priority: 24.07.1991 IT MI912047
(71) Applicant: ELBA 2 S.R.L., I-29100 Piacenza (IT)
(72) Inventor: Pizzelli, Maurizio, Piacenza (IT)
(74) Representative: Righetti, Giuseppe

(57) **Abstract**

The apparatus comprises a self-bearing framework (2), movement means (5) for displacing the framework, at least one pick up unit (8) designed to take up the goods and exhibiting a lift fork (9) movable in the region of a work portion (2a) of the framework close to one end (2b) thereof, and goods transferring means (6) disposed over the framework (2) for moving the goods from the first framework end (2b) towards a second opposite end (2c) and vice-versa, the pick up unit (8) comprising members (25) for lowering and raising the fork (9).

## Description

The present invention pertains to an apparatus for the automatic loading and unloading of goods, in particular between quays and vehicle platforms.

It is known that transportation of many types of goods is currently carried out by the use of implements known as "pallets", that is loading platforms consisting of spaced apart rectangular strips generally made of wood, resting on laths also spaced apart from one another so as to leave free spaces between them in order to enable the forks of lift trucks to be inserted in said free spaces for causing the raising and displacement of the pallets.

When said pallets need to be loaded onto or unloaded from the platforms of transport means such as industrial vehicles for example, in order to facilitate the handling of the loaded pallets on the vehicle platforms in many cases provision is made for devices to be fitted in the loading platforms for enabling an easier sliding of the pallets.

For example devices are known that substantially comprise a plurality of idler rollers having parallel axes aligned in several rows, which extend along the vehicle loading channel. During the loading-unloading operations the rollers slightly project from the platform thereby enabling the thrust-shifting of the goods, but when said operations are over the rollers can be lowered so that the pallets, or at all events the goods, may directly rest on the platform, which enables them to be held fast during the vehicle running.

Other known devices enable the autonomous handling of the goods on the loading platforms, in that they are provided with motor-driven pull elements on which the goods rest.

One of these devices is described and shown in the Italian Patent Application No. 20138A/89 filed in the name of the same applicant and to which please refer for further details.

The slide and pull elements, be they rollers, cables or chains, as well as the support guides for the pull elements, pulleys and toothed wheels and all other necessary members, are to be installed and arranged in a stable manner on the vehicles loading platform.

Whether said devices are installed during the manufacturing step, or whether they are mounted at a subsequent time, in both cases they are fixed equipments involving an important weight that greatly increases the tare of each vehicle to which they are mounted.

In addition, it is apparent that if a firm dealing with the transportation of palletized goods or similar bulky items wishes to facilitate all goods loading and unloading operations, the whole sleet of its industrial vehicles must be provided with such devices. Therefore the additional costs to be take into account are important.

Furthermore, particularly as regards the goods loading and unloading to and from quays or wharfs that are practically located flush with the loading platforms of the transport means, it has been hitherto necessary to resort to the use of lift trucks or other fixed equipments arranged on the quays for handling the goods and carrying them to the vehicle inlet or take them out of said vehicles.

However both the known devices installed on the transport means and the possible equipments fastened to the ground for handling the goods have the serious drawback that they need to be provided in advance and, in case of quay equipments, to be expressly arranged on predetermined areas. Therefore said known equipments and devices have great operating rigidity, and costs and times for their installation are substantial.

Under this situation the technical task underlying the present invention is to devise an apparatus for the automatic loading and unloading of goods, in particular between quays and vehicle platforms, capable of substantially eliminating the above drawbacks and restrictions.

Within the scope of this technical task it is an important object of the invention to devise an apparatus for the loading and unlaoding of goods between quays and vehicle platforms which offers great operating versatility, does not require any fixed installations to be mounted on either the transport means or the quays and therefore need not any preparatory intervention directed to facilitate the goods handling, in particular when pallet-loaded goods are concerned.

Another important object of the invention is to devise an apparatus that, in addition to facilitating the goods handling on the vehicle platforms, does not increase the tare of said transport means and reduces the overall costs for goods-handling installations.

Another object of the invention is to devise an apparatus which is completely self-sufficient in transferring the goods, and in particular the goods loaded on pallets, between quays and vehicle platforms and that does not require lift trucks or other machines or installations to be used.

The technical task mentioned and the objects specified are substantially achieved by an apparatus for the automating loading and unloading of goods, in particular between quays and vehicle platforms, characterized in that it comprises:
- a self-bearing framework exhibiting a prevailing direction extending longitudinally;
- movement means to shift said framework at least along said longitudinal direction;
- at least one pick up unit for said goods having at least one lift fork and being movable, at one work portion of said framework close to one end thereof, between a front position in which said fork projects longitudinally from said first framework end, and a rear position in which said fork is moved to a release position with respect to said goods disposed on said framework at said first end; and
- tranferring means for said goods located on said framework, designed to move them from said first end to a second opposite end of the framework and vice-versa;
- said pick up unit comprising members for raising and lowering said fork, adapted at least to carry out the displacement of said goods between a loading or unloading surface subsantially coincident with the surface resting on ground of said framework and the support surface defied at the upper part of the same framework.

The description of a preferred embodiment of an apparatus for the automatic loading and unloading of goods, in particular between quays and vehicle platforms, in accordance with the present invention, is given hereinafter by way of non-limiting example with reference to the accompanying drawings, in which:
- Fig. 1 is a plan view of the apparatus of the invention;
- Fig. 2 is a side elevation view of the apparatus shown in Fig. 1;
- Figs. 3 and 4 are sections taken along lines III-III and IV-IV respectively, in Fig. 2;
- Fig. 5 is a top view of one portion of a unit for picking up goods being part of the apparatus shown in Fig. 1;
- Fig. 6 is a section taken along line VI-VI in Fig. 5;
- Fig. 7 is a section taken along line VII-VII in Fig. 5; and
- Fig. 8 is a plan view of a dual automatic loading and unloading apparatus.

Referring to the drawings, the apparatus of the invention is generally denoted by reference numeral 1.

It comprises a self-bearing framework, in turn comprising four main longitudinal members 3 extending parallelly to one another in the prevailing longitudinal direction of the framework 2.

The main longitudinal members 3 are disposed in pairs at the longitudinal edges of the framework 2 so that each pair defines a longitudinal groove 4 within which movement means 5 for shifting the framework 2 are housed said means being adapted to move the framework at least along said longitudinal direction, goods transferring means and more particularly means designed to transfer the loading pallets on which packaged or unpackaged goods rest, being located on the framework 2 at an upper support surface 7 defined by the upper surfaces of the longitudinal members 3 or being substantially adjacent said surfaces.

In addition apparatus 1 comprises a pallet pick up unit 8 exhibiting a lift fork 9 for said pallets and being movable in the region of a work portion 2a of the framework 2 disposed close to one end 2b of the framework itself.

In greater detail, the transferring means 6 comprises first transferring means 6a extending in the region of the work portion 2a of the framework 2 and second transferring means 6b extending consecutively to the first transferring means 6a between the work portion 2a and a second end 2c of the framework 2 opposite the first end 2b.

The first transferring means 6a comprises a pair of first endless chains 10 wrapped around appropriate toothed wheels and housed within the longitudinal grooves 4 so that their upper longitudinal drive stretches slightly emerge upwardly from the support surface 7 defined by the longitudinal members 3.

In a conventional manner the first chains 10 are driven by first motors 11, of the hydraulic type for example, transmitting motion to the first chains 10 through additional chains 12 located alongside the first chains. The first chains 10 also exhibit lower return stretches completely contained above a surface resting on ground 13 defined by the lower surfaces of the main longitudinal members 3.

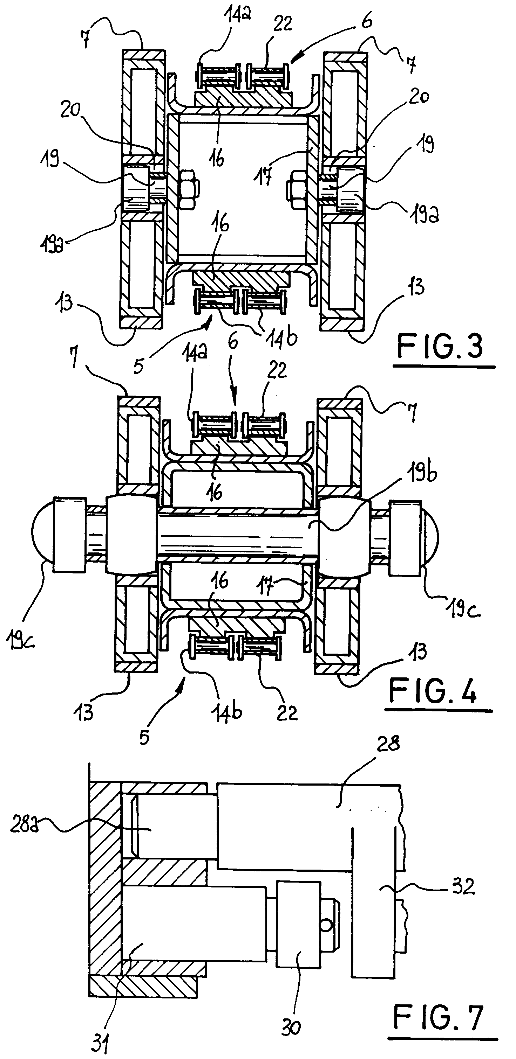

The second transferring means 6b comprises a pair of second endless chains 14 housed in the grooves 4 as well, wrapped on toothed wheels 15 and exhibiting upper drive stretches 14a and lower return stretches 14b lying on slide and support guides 16 in turn integral with box-shaped beams 17 fitted in the grooves 4 too (Figs. 3 and 4).

The box-shaped beams 17 are made vertically movable with respect to the longitudinal members 3 by displacement means 18 so that selectively in a first operating condition they make the upper drive stretches 14a emerge from the support surface 7 while keeping the lower return stretches 14b above the surface resting on ground 13 of the framework 2 and, vice-versa, in a second operating condition they make the lower return stretches 14b emerge from said surface resting on ground 13 while keeping the upper drive stretches 14a above the support surface 7.

In the second operating condition the lower stretches 14b of the second chains 14 practically embody tracks supporting the whole self-bearing framework 2 and define said movement means 5.

The displacement means 18 for the box-shaped beams 17 and consequently the guides 16 comprises a plurality of guide pins 19 rotatably and transversely engaged in the box-shaped beams 17 and disposed in appropriate number spaced apart along the extension direction of said beams. The guide pins 19 have rolling portions 19a housed in respective elongated slide holes 20 formed in the longitudinal members 3 and extending over a suitable length according to parallel planes inclined to the horizontal plane. At least one hydraulic cylinder 21 is provided in register with at least one guide pin 19 for each box-shaped beam 17, said cylinder being engaged to a longitudinal member 3 the rod of which acts on the guide pin 19 so as to cause the simultaneous translation of all the guide pins 19 of each beam 17 in the respective elongated slide holes 20 and consequently the lowering or raising of the guides 16 with respect to the longitudinal members 3.

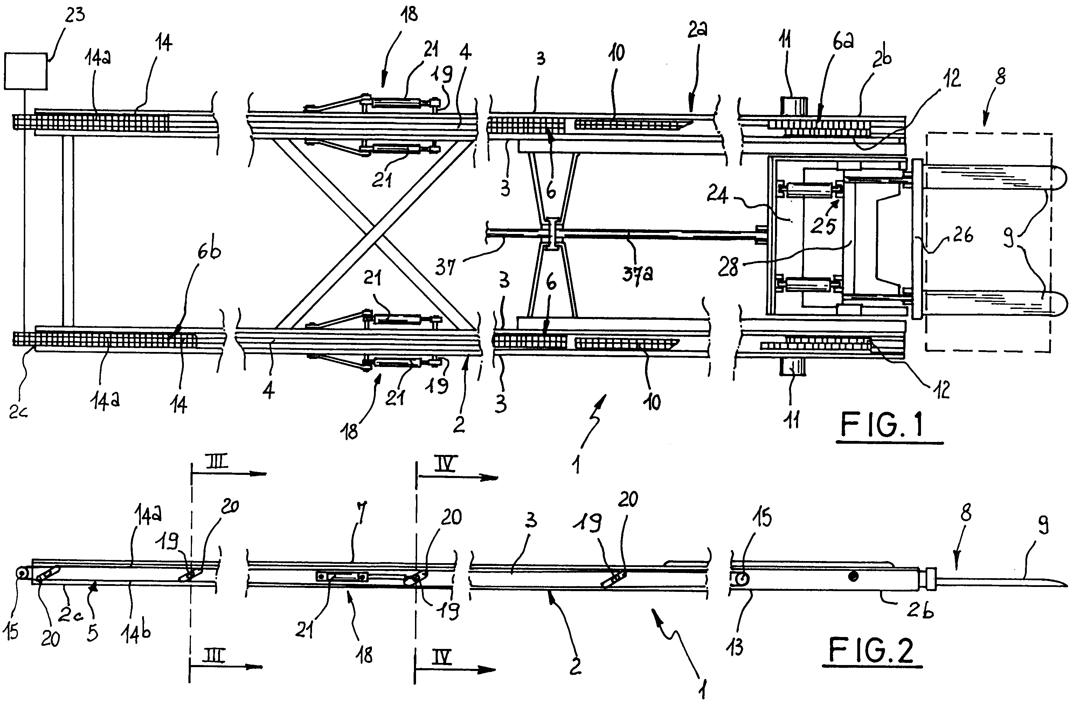

By way of example, in Fig. 1 two pairs of first hydraulic cylinders 21 are shown, each pair acting on a box-shaped beam 17.

Advantageously, as shown in Fig. 4, each pair of guide pins 19 adjacent the hydraulic cylinders 21, is embodied by a single guide pin 19b of greater sizes and having end portions 19c adapted to come in engagement with the hydraulic cylinder 21 rods.

Preferentially both the first chains and second chains 14 are provided with rolling rollers or bearings 22 at the pins connecting the links forming said chains, so as to create a rolling friction of very reduced value on the slide and support guides 16.

In a conventional manner the second chains 14 are driven in movement about the toothed wheels 15 by second motors 23, of the hydraulic type for example.

The pallet pick up unit 8 comprises a slide 24 slidable between a front position (shown in Fig. 1) in which the fork 9 projects longitudinally from the first end 2b of the framework 2 and a rear position in which the slide 24 is moved backward so that it is disposed at the end section of the work portion 2a close to the second transferring means 6b and exhibits the fork 9 in a release position with respect to the goods or pallets placed on the framework 2 and, more particularly, on the first transferring means 6a, at the first framework end 2b.

Members 25 for raising and lowering the fork 9 are disposed on the slide 24 and they are adapted to cause the displacement of the goods between a loading/unloading surface, for example corresponding to the loading platform of a transport means substantially coincident with the surface resting on ground 13 of the framework 2, and the support surface 7 defined at the upper part of the framework 2 and practically coincident with the surface defined by the upper drive stretches of the first chains 10.

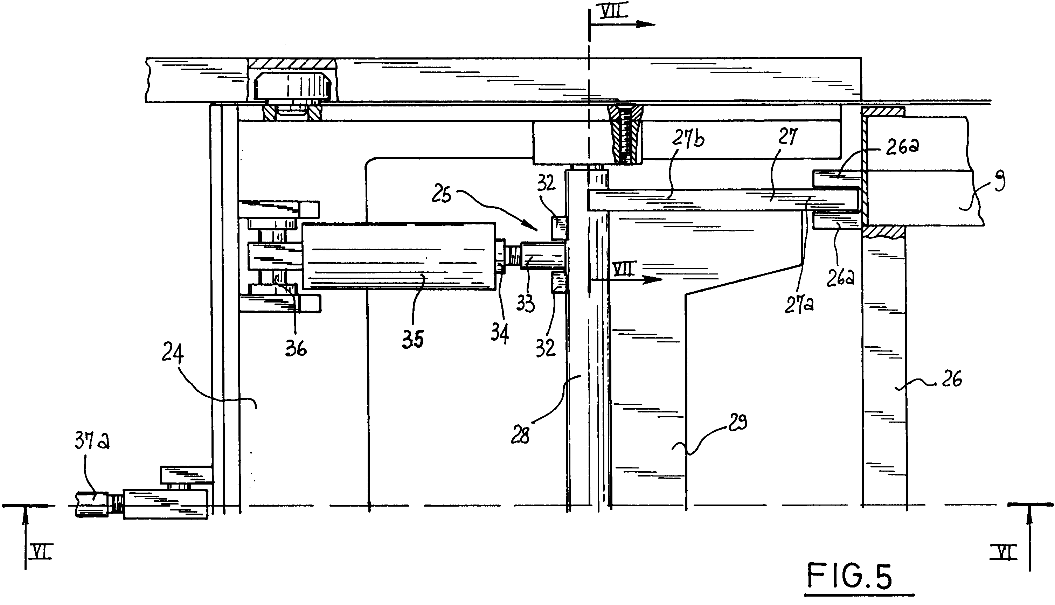

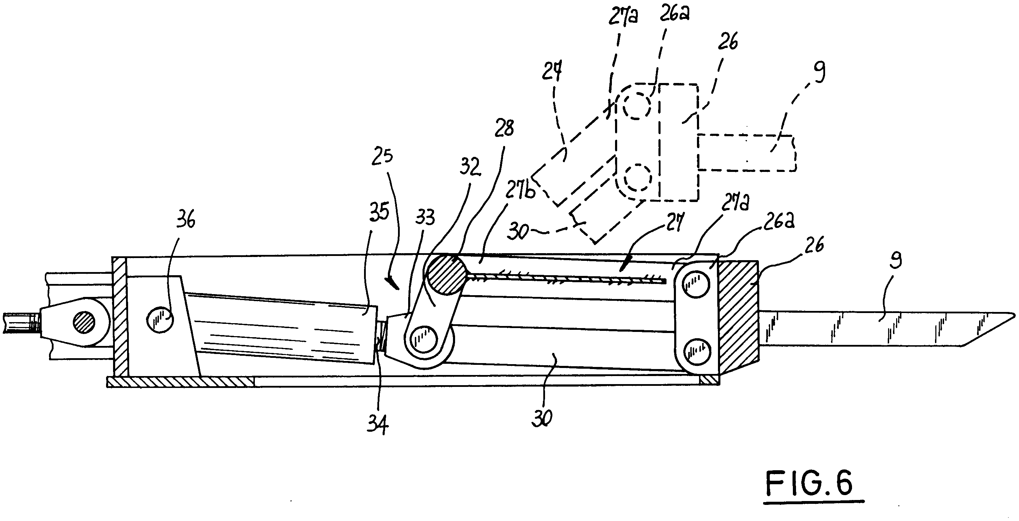

The raising and lowering members 25 (Figs. 5 and 6) comprise one cross member 26 supporting the fork 9 prongs and a pair of supporting levers 27 extending longitudinally and oscillatably mounted at one end 27a thereof to fork-shaped lugs 26a integral with the first cross member 26 at substantially end portions of the cross member itself.

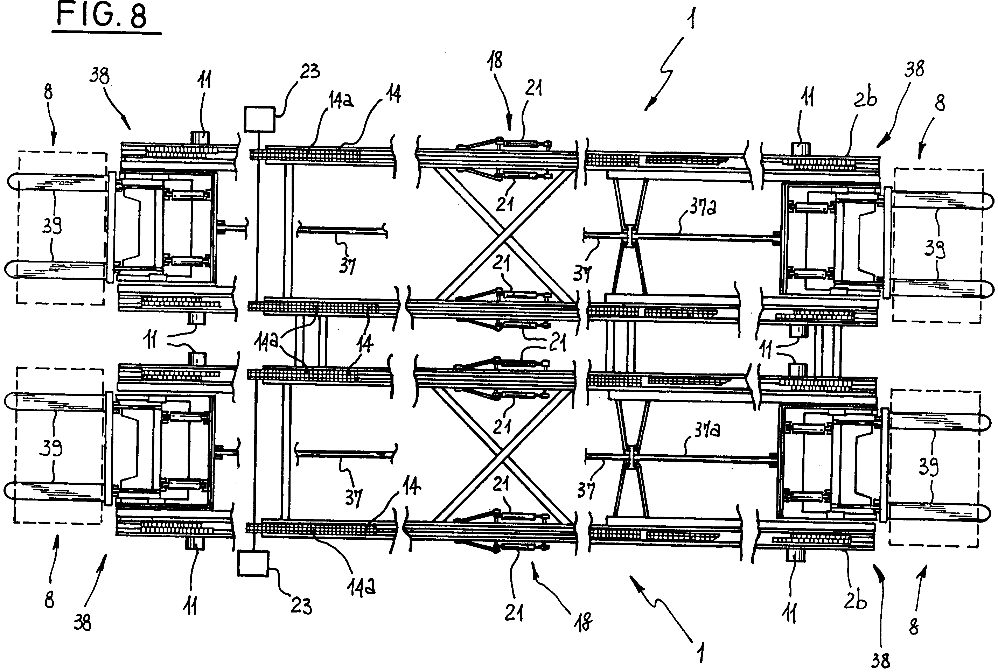

The supporting levers 27 are integral at their second ends 27b with a second cross member 28 the end of which is rotatably engaged to the slide 24 at end pivot pins 28a (Fig. 7). A plate 29 is welded both to the support levers 27 and the second cross member 28 and defines a connecting and stiffening rib between said elements.

Mounted to the fork-shaped lugs 26a at a lower position and parallelly with respect to the supporting levers 27 is a pair of rods 30, advantageously of adjustable length, the ends of which are slidably engaged to the slide 24 upon interposition of support pins 31 housed therein and extending parallelly to the end pivot pins 28a.

Practically the support levers 27, rods 30, fork-shaped lugs 26a as well as the longitudinal member lengths included between the end pivot pins 28a and support pins 31 define two four-bar linkages movable in vertical planes with which the first cross member 26 is integral.

The movement of these four-bar linkages is effected by a pair of fork-shaped operating arms 32, each integral at one end thereof with the second cross member 28 and rotatably engaged at the other end to a sleeve 33 screwed on a rod 34 of a second hydraulic cylinder 35, in turn rotatably mounted to the slide 24 at a pivot point 36.

Due to their sizes, the slide 24 and the lowering and raising members 25 completely extend within the framework 2 when the fork 9 is in the lowered position, so that the slide 24 of the fork 9 can run underneath the upper support surface 7, that is underneath one pallet or the goods resting on the first transferring means 6a.

Also provided is a third hydraulic cylinder 37 (Fig. 1) which is engaged to the framework 2 and acts by its rod 37a on the slide 24 so as to move it within the work portion 2a.

Operation of the apparatus for the automatic loading and unloading of goods in accordance with the invention described above mainly as regards structure, is as follows.

If it is necessary to unload a series of pallets for example from a platform of a transport means to a quay disposed flush with the platform, the apparatus 1 is moved forward as far as it comes substantially in contact, by its first end 2b, with the first pallet to be unloaded. If said pallet is located well inside the platform the apparatus moves forward along the platform itself until it is necessary.

The movement of the framework 2 takes place after the first hydraulic cylinders 21 have been actuated for lowering the second chains 14 below the surface resting on ground 13 of the main longitudinal members 3. Practically the downward displacement of the guide pins 19 to within the elongated slide holes 20 causes the framework 2 to be lifted from ground and the lower stretches 14b of the second chains 14 to get in contact with the ground. In this operating condition the lower stretches 14b can therefore act as support tracks making the whole apparatus move forward.

When the framework 2 forward movement is over, there is a new intervention of the first hydraulic cylinders 21 that brings the main longitudinal members 3 again in contact with the ground so that the upper drive stretches 14a of the second chains 14 project upwardly from said longitudinal members. The slide 24 of the pick up unit 8 is moved forward, which makes the lift fork 9 maintained in a lowered position emerge from the first end 2b. Therefore the lift fork penetrates into the pallet. The lowering and raising members 25, and more particularly the second hydraulic cylinders 35, by the extension of the respective rods 34 cause the rotation upwardly of the supporting levers 27 and consequently the lifting of the fork 9 together with the pallet resting thereon. By previously adjusting the rod 30 lengths it is possible to give the fork 9 prongs an orientation which is as much as possible horizontal.

Then the slide 24 moves backward as far as the fork 9 is brought substantially flush with the first end 2b. The second hydraulic cylinders 35 partially retract their rods 34 thereby causing the lower part of the pallet to rest on the first chains 10.

The slide 24 moves backward again and the fork 9 can get free from the pallet.

The further retraction of the rods 34 of the second hydraulic cylinders 35 enables the supporting levers 27 and the first cross member 26 to be brought to the lowered position, completely under the upper stretches of the first chains 10 which therefore can set in motion and displace the pallet as far as the second chains 14. The second chains continue the pallet movement until the first chains 10 get clear of said pallet.

When the second chains 14 have performed the pallet-transferring function, they are lowered again so that they are ready to carry out the subsequent movement of the framework 2. Simultaneously the slide 24 is moved again towards the end 2b.

For unloading a second pallet the previously described operating steps are repeated, namely first of all the framework 2 is moved forward again as far as it comes into contact with the end 2b of the second pallet, so that the fork 9 can penetrate into said pallet.

As pallets are unloaded by the pick up unit 8, they are disposed close to each other on the second chains 14 from where they can be easily picked up. Since the inventive apparatus 1 is provided with a movement of its own, it is also possible to envisage the possibility that the apparatus itself should transfer the pallets until the area provided for their storage.

The unloading of the pallets from the apparatus, that is the loading of the pallets for example onto a vehicle platform involves a succession of similar operating steps carried out however following a reverse order.

More particularly, after the framework 2 has been suitably positioned, each pallet which is disposed on the second chains 14 is transferred by said chains and by the first chains 10 as far as it is flush with the first end 2b of the framework 2. The second hydraulic cylinders 35 cause the partial raising of the fork 9 until the prongs thereof are in register with the pallet spaces provided for receiving them. The slide 24 moves forward until the fork 9 is completely inserted in the pallet. A further extension of the rods 34 enables the pallet to be raised above the first chains 10.

The slide 24 further moves forward until the fork 9 completely emerges from the first end 2b. The second hydraulic cylinders 35 retract their rods so that the fork 9 and, as a result, the pallet, is lowered to the ground. The slide 24 moves backward and consequently the fork 9 is freed from the pallet and therefore ready to transfer another pallet.

Obviously as the pallets are transferred from the apparatus to a vehicle platform, the apparatus itself conveniently moves backward by an amount sufficient to enable a pallet to be laid down.

Referring particularly to Fig. 8, for directly unloading the goods to the ground a second pick up unit 38 identical with the first pick up unit 8 may be provided, said second unit being disposed at the other end of the movement means 5. In greater detail, the second pick up unit 38 too will be provided with a lift fork 39 located at the second end of the framework 2. The lift fork 39 will be movable between a rear position projecting longitudinally from said second end 2c of the framework 2 and a front position in which the fork 39 is disengaged from the goods located at the second end 2c.

In this manner the apparatus in accordance with the invention is capable of carrying out the loading and unloading is capable of carrying out the loading and unloading operations directly from a warehouse to a truck and vice-versa.

It should be also noted that the apparatus 1 in accordance with the invention can be also rigidly coupled with another identical apparatus, disposed parallelly to the preceding one as shown in Fig. 8, for simultaneously loading or unloading two rows of palletized good onto and from the vehicle platform respectively. In this case, by suitably stopping one of the second motors 23 it is also possible to correct the advancing direction of the dual apparatus in order to always have a correct arrangement of the same with respect to the loading platform.

The invention achieves important advantages.

It will be in particular recognized that a single apparatus in accordance with the invention can be used for automatic loading and unloading operations on distinct transport means none of which is provided with equipments or devices of the fixed type.

If one takes into account the fact that it is not necessary either to provide installations on the quays or to use lift trucks for transferring the goods from the quays to the vehicle platforms, it is apparent how by using one or more apparatus according to the invention it is possible to greatly reduce costs connected with the goods handling.

It is also important to note that the particular embodiment shown is also advantageous in its most specific aspects.

The apparatus is susceptible of many modifications and variations, which do not constitute a departure from the true scope of this invention as claimed in the following claims. In addition, all of the details may be replaced by technically equivalent elements. In practice, the materials, shapes and sizes may be of any nature and magnitude in accordance with requirements.

## Claims

1. An apparatus for the automatic loading and unloading of goods, in particular between quays and vehicle platforms, characterized in that it comprises:
- a self-bearing framework (2) exhibiting a prevailing direction extending longitudinally;
- movement means (5) to shift said framework (2) at least along said longitudinal direction;
- at least one pick up unit (8) for said goods having at least one lift fork (9) and being movable, at one work portion (2a) of said framework (2) close to one end (2b) thereof, between a front position in which said fork (9) projects longitudinally from said first framework end (2b), and a rear position in which said fork is moved to a release position with respect to said goods disposed on said framework (2) at said first end (2b); and
- transferring means (6) for said goods located over said framework (2) and designed to move them from said first end (2b) to a second opposite end (2c) of the framework and vice-versa;
- said pick up unit (8) comprising members (25) for raising and lowering said fork (9), adapted at least to carry out the displacement of said goods between a loading or unloading surface substantially coincident with the surface resting on ground (13) of said framework (2) and the support surface (7) defined at the upper part of the same framework.

2. An apparatus according to claim 1, characterized in that said transferring means (6) comprises first transferring means (6a) extending in the region of said work portion (2a) of the framework (2) and second transferring means (6b) extending consecutively to said first means (6a) between said second end (2c) and work portion (2a).

3. An apparatus according to claim 2, characterized in that said first (6a) and second (6b) transferring means comprises first and second endless roller chains (10, 14) wrapped around toothed wheels and exhibiting upper drive stretches and lower return stretches extending in said longitudinal direction and in that at said second transferring means (6b) provision is made for :
- slide and support guides (16), each of which is adapted to support said upper stretch (14a) and a corresponding lower stretch (14b) of said chain (14), and
- displacement means (18) designed to move said guides (16), so that selectively in a first operating condition they make the upper drive stretches (14a) of said chains emerge from said support surface (7) and in a second operating condition they make the lower return stretches (14b) emerge from said surface resting on ground (13) of said framework, in the second operating condition said second transferring means (6b) featuring support tracks defining said movement means (5) for moving said framework (2).

4. An apparatus according to claim 3, characterized in that said displacement means (18) for shifting said guides (16) comprises:
- a plurality of guide pins (19) rotatably engaged transversely of each of said slide guides (16),
- elongated slide holes (20) extending in said framework (2) according to planes inclined to a horizontal plane and each adapted to house one of said guide pins (19), and
- at least one hydraulic cylinder (21) for each slide guide (16) which acts on one of said guide pins in such a way as to cause said guide pins (19) to move in said elongated slide holes (20).

5. An apparatus according to claim 1, characterized in that said pick up unit (8) comprises a slide (24) running in said work portion (2a) of said framework (2) and extending vertically within the framework itself so as to remain with said fork (9) in a lowered position completely below said framework surface resting on ground (13).

6. An apparatus according to claim 5, characterized in that said lowering and raising members (25) comprise:
- one support cross member (26) integral with said fork (9),
- a pair of supporting levers (27) extending longitudinally to said framework (2) and oscillatably mounted at one end (27a) thereof to said first cross member (26), said supporting levers (27) being integral, at their second ends (27b), with a second cross member (28) rotatably engaged with said slide (24),
- a pair of rods (30) substantially parallel to said pair of levers (27) and hinged at the ends to said slide (24) and first cross member (26),
- at least one operating arm (32) integral with said second cross member (28), and
- at least a second hydraulic cylinder (35) connected to said slide (24) and exhibiting a rod (34) acting on said operating arm (32) so as to case the rotation of said second cross member (28).

7. An apparatus according to claim 5, characterized in that at least a third hydraulic cylinder (37) is provided which is engaged with said framework (2) and acts on said slide (24) in order to move the latter to said work position.

8. An apparatus according to claim 1, characterized in that a second pick up unit (38) is provided which is designed to take up said goods and exhibits a lift fork (39) movable, at the second end (2c) of said framework (2), between a rear position in which the fork (39) projects longitudinally of said second end (2c) of the framework (2) and a front position in which said fork is in a disengagement position with respect to the goods located on said framework (2), at said second end (2c).

9. An apparatus according to claim 1, characterized in that it operates in combination with another identical apparatus disposed side by side, parallelly to the first apparatus.
